(19)

Europäisches
Patentamt
European
Patent Office
Office européen
des brevets

(11)  **EP 3 392 783 A1**

(12)  **EUROPEAN PATENT APPLICATION**
published in accordance with Art. 153(4) EPC

(43) Date of publication:
    **24.10.2018 Bulletin 2018/43**

(21) Application number: **16874785.5**

(22) Date of filing: **08.12.2016**

(51) Int Cl.:
    ***G06F 17/30*** (2006.01)

(86) International application number:
    **PCT/CN2016/108980**

(87) International publication number:
    **WO 2017/101728 (22.06.2017 Gazette 2017/25)**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **MA MD**

(30) Priority: **18.12.2015  CN 201510960651**

(71) Applicant: **Alibaba Group Holding Limited
    Grand Cayman (KY)**

(72) Inventors:
    • **HUANG, Guangyuan
      Hangzhou
      Zhejiang 311121 (CN)**

    • **LAN, Jinhe
      Hangzhou
      Zhejiang 311121 (CN)**
    • **MAI, Ganglin
      Hangzhou
      Zhejiang 311121 (CN)**
    • **SHI, Xiaojing
      Hangzhou
      Zhejiang 311121 (CN)**

(74) Representative: **Barker Brettell LLP
    Medina Chambers
    Town Quay
    Southampton SO14 2AQ (GB)**

(54)  **SIMILAR WORD AGGREGATION METHOD AND APPARATUS**

(57)    A method and an apparatus for aggregating similar terms are provided by the embodiments of the present application. The method includes extracting a plurality of candidate terms having a same term property from historical labeled data of network items; separately extracting associated terms that are adjacent to the candidate terms and have term properties associated therewith from the historical labeled data; and aggregating the plurality of candidate terms based on similarity degrees of the associated terms, and labeling thereof as synonyms. Based on the embodiments of the present application, similar relationships among candidate terms can be mined, and classification of synonyms can be effectively performed for unstructured and non-standard review terms related to electronic commerce.

```
┌──────────────────────────────────────────────────┐ 101
│ EXTRACT A PLURALITY OF CANDIDATE TERMS HAVING A   │
│ SAME TERM PROPERTY FROM HISTORICAL LABELED DATA   │
│ OF A NETWORK ITEM                                 │
└──────────────────────────────────────────────────┘
                        │
                        ▼
┌──────────────────────────────────────────────────┐ 102
│ SEPARATELY EXTRACT ASSOCIATED TERMS BEING         │
│ ADJACENT TO THE CANDIDATE TERMS AND HAVING        │
│ RESPECTIVE TERM PROPERTIES ASSOCIATED WITH THE    │
│ CANDIDATE TERMS FROM THE HISTORICAL LABELED DATA  │
└──────────────────────────────────────────────────┘
                        │
                        ▼
┌──────────────────────────────────────────────────┐ 103
│ AGGREGATE THE PLURALITY OF CANDIDATE TERMS BASED  │
│ ON SIMILARITY DEGREES OF THE ASSOCIATED TERMS,    │
│ AND LABELING THEREOF AS SIMILAR TERMS             │
└──────────────────────────────────────────────────┘
```

FIG. 1

**EP 3 392 783 A1**

# Description

The present application claims priority to Chinese Patent Application No. 201510960651.X, filed on 18 December 2015, entitled "Similar Term Aggregation Method and Apparatus," which is hereby incorporated by reference in its entirety.

## Technical Field

The present application relates to the technical field of the Internet, and particularly to similar term aggregation methods and apparatuses.

## Background

It has become very common for people to conduct shopping through websites of electronic commerce platforms. Generally, after making a purchase, a user will give reviews on a product, reviewing on a variety of aspects, such as the quality of the product, the service of an associated merchant, and an express logistics. In order to better understand the real shopping experience of the user, analysis can be performed on these reviews.

Since different users are concerned about different characteristics of products and styles of reviews of different users are all different, text reviews related to electronic commerce are not structured and standardized data, thus increasing the difficulty of analysis. Furthermore, even if reviews are given for the same characteristic of a product, phrases that are used by users can differ greatly, e.g., "power consumption", "endurance". Using existing textual analysis methods cannot identify them as synonyms from a literal semantic analysis. However, they both describe the same characteristic of a mobile phone product, and can be classified as synonyms in the scope of electronic commerce.

Therefore, a problem of failing to conduct classification of synonyms for reviews related to electronic commerce exists in the existing textual analysis methods.

## Summary

In view of the above problem, embodiments of the present application are proposed to provide a similar term aggregation method and a corresponding similar term aggregation apparatus to solve the above problem or at least a portion of the above problem.

In order to solve the above problem, the present discloses a similar term aggregation method, which includes extracting a plurality of candidate terms having a same term property from historical labeled data of network items; separately extracting associated terms that are adjacent to the candidate terms and have term properties associated therewith from the historical labeled data; and aggregating the plurality of candidate terms based on similarity degrees of the associated terms, and labelling thereof as synonyms.

Optionally, extracting the plurality of candidate terms having the same term property from the historical labeled data of the network items includes demarcating the historical labeled data into a plurality of basic term units according to a preset term segmentation rule; and extracting the plurality of candidate terms having the same term property from the plurality of basic term units.

Optionally, prior to extracting the plurality of candidate terms having the same term property, the method further includes calculating term frequency - inverse document frequency of the plurality of basic term units; and selecting basic term units having respective term frequency - inverse document frequency satisfying a preset range.

Optionally, prior to aggregating the plurality of candidate terms based on the similarity degrees of the associated terms, the method further includes using the candidate terms as nodes, and extracting the associated terms as neighboring nodes of the nodes to generate a nodal network graph that records term property association relationships between the candidate terms and the associated terms.

Optionally, aggregating the plurality of candidate terms based on the similarity degrees of the associated terms includes calculating degrees of similarity of the neighboring nodes of the nodes, and calculating probability prediction values of an existence of connection links between the nodes that represent similarities between the candidate terms; and adding a connection link between nodes having a probability prediction value greater than a preset threshold, updating the nodal network graph, and aggregating candidate terms corresponding to nodes having connection links.

Optionally, the preset threshold includes a first preset threshold and a second preset threshold which is smaller than the first preset threshold. Adding the connection link between the nodes having the probability prediction value greater than the preset threshold, updating the nodal network graph, and aggregating the candidate terms corresponding to the nodes having connection links includes adding a connection link between nodes having a probability prediction value greater than the first preset threshold, creating a plurality of independent connected graphs in the updated nodal network graph for unconnected nodes and connected nodes, extracting nodes included in a same connected graph, and aggregating candidate terms corresponding to the nodes; and adding a connection link between nodes having a probability prediction value greater than the second preset threshold, and for a region having a connection link density greater than a preset threshold, extracting nodes included in the region and aggregating candidate terms corresponding to the nodes.

Optionally, prior to updating the nodal network graph, the method further includes deleting connection links that have previously existed between the neighboring nodes.

Optionally, prior to extracting the plurality of candidate terms having the same term property from the historical labeled data of the network items, the method further includes labeling item categories of corresponding historical labeled data segments for item categories to which the network items belong, and demarcating historical labeled data segments of different categories; and collecting historical labeled data segments of a same category, and generating the historical labeled data.

Optionally, separately extracting the associated terms that are adjacent to the candidate terms and have the term properties associated therewith from the historical labeled data includes extracting associated terms that are adjacent to the candidate terms and are used for describing the candidate terms from the historical labeled data.

Optionally, after extracting the plurality of candidate terms having the same term property from the historical labeled data of the network items, the method further includes selecting candidate terms having the term property satisfying a preset property scope.

Optionally, the historical labeled data of the network items is term data that has an amount of character data less than a preset threshold and is used for reviewing the network items.

In order to solve the above problem, the present application further provides a similar term aggregation apparatus, which includes a candidate term extraction module used for extracting a plurality of candidate terms having a same term property from historical labeled data of network items; an associated term extraction module used for separately extracting associated terms that are adjacent to the candidate terms and have term properties associated therewith from the historical labeled data; and a candidate aggregation module used for aggregating the plurality of candidate terms based on similarity degrees of the associated terms, and labeling thereof as synonyms.

Optionally, the candidate term extraction module includes a basic term unit demarcation sub-module used for demarcating the historical labeled data into a plurality of basic term units according to a preset term segmentation rule; and a candidate term extraction sub-module used for extracting the plurality of candidate terms having the same term property from the plurality of basic term units.

Optionally, the apparatus further includes a term frequency-importance degree calculation module used for calculating term frequency - inverse document frequency of the plurality of basic term units; and a basic term selection module used for selecting basic term units having respective term frequency - inverse document frequency satisfying a preset range.

Optionally, the apparatus further includes a nodal network graph generation module used for using the candidate terms as nodes, and extracting the associated terms as neighboring nodes of the nodes to generate a nodal network graph that records term property association relationships between the candidate terms and the associated terms.

Optionally, the candidate term aggregation module includes a similarity degree calculation sub-module used for calculating degrees of similarity of the neighboring nodes of the nodes, and calculating probability prediction values of an existence of connection links between the nodes that represent similarities between the candidate terms; and a connection link addition sub-module used for adding a connection link between nodes having a probability prediction value greater than a preset threshold, updating the nodal network graph, and aggregating candidate terms corresponding to nodes having connection links.

Optionally, the preset threshold includes a first preset threshold and a second preset threshold which is smaller than the first preset threshold. The connection link addition sub-module includes a connected graph aggregation sub-unit used for adding a connection link between nodes having a probability prediction value greater than the first preset threshold, creating a plurality of independent connected graphs in the updated nodal network graph for unconnected nodes and connected nodes, extracting nodes included in a same connected graph, and aggregating candidate terms corresponding to the nodes; and a region aggregation sub-unit used for adding a connection link between nodes having a probability prediction value greater than the second preset threshold, and for a region having a connection link density greater than a preset threshold, extracting nodes included in the region and aggregating candidate terms corresponding to the nodes.

Optionally, the apparatus further includes a connection link deletion module used for deleting connection links that existed between the neighboring nodes.

Optionally, the apparatus further includes an item category demarcation module used for labeling item categories of corresponding historical labeled data segments for item categories to which the network items belong, and demarcating different categories of historical labeled data segments; and a historical labeled data generation module used for collecting historical labeled data segments of a same category, and generating the historical labeled data.

Optionally, the associated term extraction module includes an associated term extraction sub-module used for extracting associated terms that are adjacent to the candidate terms and are used for describing the candidate terms from the historical labeled data.

Optionally, the apparatus further includes a candidate term selection module used for selecting candidate terms having the term property satisfying a preset property scope.

Optionally, the historical labeled data of the network items is term data that has an amount of character data less than a preset threshold and is used for reviewing the network items.

The embodiments of the present application include the following advantages.

Compared to existing textual analysis methods that identify synonyms from literal semantics of candidate terms, the embodiments of the present application discover similarity relationships between candidate terms by extracting associated terms that are adjacent to the candidate terms and have term properties associated therewith and aggregating the candidate terms based on degrees of similarity between the candidate terms. Synonyms can be effectively classified for unstructured and non-standardized terms of reviews related to electronic commerce.

Furthermore, performing aggregation on similar candidate terms can refine key terms of review from the complex content of historical labeled data, helps a user to quickly understand an overall review situation of a network item, and improve the convenience of the user to obtain information.

**Brief Description of the Drawings**

FIG. 1 is a flowchart of a first embodiment of a similar term aggregation method of the present application.
FIG. 2 is a flowchart of a second embodiment of a similar term aggregation method of the present application.
FIG. 3 is a structural diagram of a first embodiment of a similar term aggregation apparatus of the present application.
FIG. 4 is a structural diagram of a second embodiment of a similar term aggregation apparatus of the present application.
FIG. 5 is a flowchart of aggregating synonyms using a link prediction algorithm of the present application.

**Detailed Description**

In order to enable the above goals, features and advantages of the present application to be understood in a better manner, the present application is described in further detail in conjunction with accompanying drawings and specific implementations.

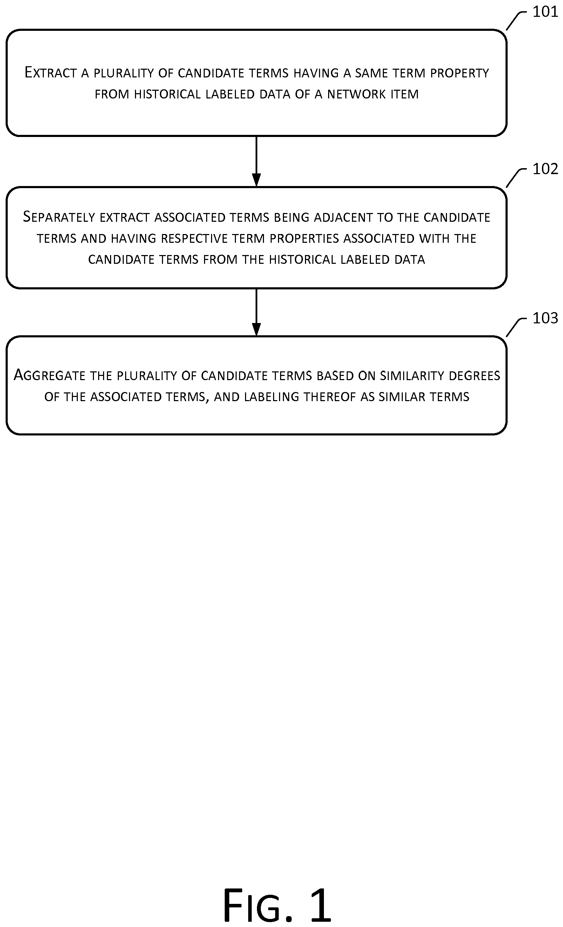

FIG. 1 shows a flowchart of a first embodiment of a similar term aggregation method of the present application, which may include the following operations.

Operation 101: Extract a plurality of candidate terms having a same term property from historical labeled data of a network item.

It should be noted that a term can be understood as a short text, which can be manifested as a word, a phrase, and a short sentence formed by a plurality of terms, or can be a sentence formed by character(s), number(s), and symbol(s), etc. Various languages can be used for the characters, such as Chinese characters, English alphabets, Roman letters, etc.

The network item can be a network item such as a product, software, a video, an audio, etc. Users usually conduct reviews on a network item. The historical labeled data includes text reviews conducted by users for the network item. For texts of historical labeled data, texts having a same term property are extracted to obtain candidate terms. Term properties can include a variety of properties of a term such as "noun", "adverb", "adjective", and "preposition", etc.

In a real application, term properties of texts such as "mobile phone" and "handbag", "socks" are "noun", which can be extracted as candidate terms having a term property of "noun". Term properties of texts such as "very fast" and "quick" are "adjective", which can be extracted as candidate terms having a term property of "adjective".

As a preferred example of the embodiments of the present application, the historical labeled data of the network item is term data that has an amount of character data less than a preset threshold and is used for reviewing the network item.

Reviews for a network item on a website of an electronic commerce platform usually are short texts, and characters included therein are relatively few. Therefore, historical labeled data of a network item can be term data having an amount of character data less than a preset threshold. The term data is used for reviewing the network item, and ways of description of reviews can be multifarious. If a common natural language processing method such as word2vec is used, a large amount of textual materials is needed to be inputted as training samples, and this is therefore not suitable for processing short texts that have great differences in ways of description.

Operation 102: Separately extract associated terms being adjacent to the candidate terms and having respective term properties associated with the candidate terms from the historical labeled data.

It should be noted that an association of term properties is an association according to a grammatical meaning. For example, in a common grammatical rule, an adjective is followed by and adjacent to a noun, such as "soft" "cloth material", or a noun is followed by and adjacent to an adverb, such as "material flow" "very fast". Using grammatical rule(s) can identify associated terms that are adjacent to the candidate terms and have term properties mutually associated with the candidate terms from the historical labeled data. The associated terms that are identified are extracted.

Operation 103: Aggregate the plurality of candidate terms based on similarity degrees of the associated terms, and labeling thereof as similar terms.

A candidate term can have a plurality of associated terms. Associated terms of any two candidate terms can be compared. If the number of same or similar associated terms between the two is more, the likelihood that these two candidate terms are synonyms is higher. A noun is used as an example. Adjectives that match with a candidate term "cloth material" include "smooth", "soft", and "gentle", etc. Adjectives that match with another candidate term "shell fabric" include "smooth" and "gentle", etc. A degree of similarity between the associated terms of the two is relatively high, and these two candidate terms can be aggregated and labeled as synonyms.

A number of ways of determining a degree of similarity between associated terms may exist, for example, by calculating a Jaccard coefficient of the associated terms and using thereof as the degree of similarity. Furthermore, methods such as a PA algorithm (Preferential Attachment Index), an AA algorithm (Adamic-Adar Index), may also be used for calculating a degree of similarity between associated terms.

A number of ways of aggregating candidate terms may exist. For example, a nodal network graph of texts can be constructed among candidate terms, and among candidate terms and associated terms. Specifically, candidate terms may be treated as nodes, and associated terms as neighboring nodes to generate a nodal network graph that records the candidate terms and the associated terms. A link prediction algorithm is then used to calculate the number of neighboring nodes that are common to two nodes. A higher number of common neighboring nodes indicates that a degree of similarity of associated terms is higher, and a likelihood that a connection link between the nodes is higher. In other words, the likelihood that candidate terms corresponding to these nodes are synonyms to each other is higher. Nodes having a relatively high likelihood that a connection link exists are aggregated, and thereby candidate terms having a relatively high likelihood of being synonyms to each other are aggregated.

Compared to existing textual analysis methods that identify synonyms from literal semantics of candidate terms, the embodiments of the present application discover similarity relationships between candidate terms by extracting associated terms that are adjacent to the candidate terms and have term properties associated therewith and aggregating the candidate terms based on degrees of similarity between the candidate terms. Synonyms can be effectively classified for unstructured and non-standardized terms of reviews related to electronic commerce.

Furthermore, performing aggregation on similar candidate terms can refine key terms of review from the complex content of historical labeled data, helps a user to quickly understand an overall review situation of a network item, and improve the convenience of the user to obtain information.

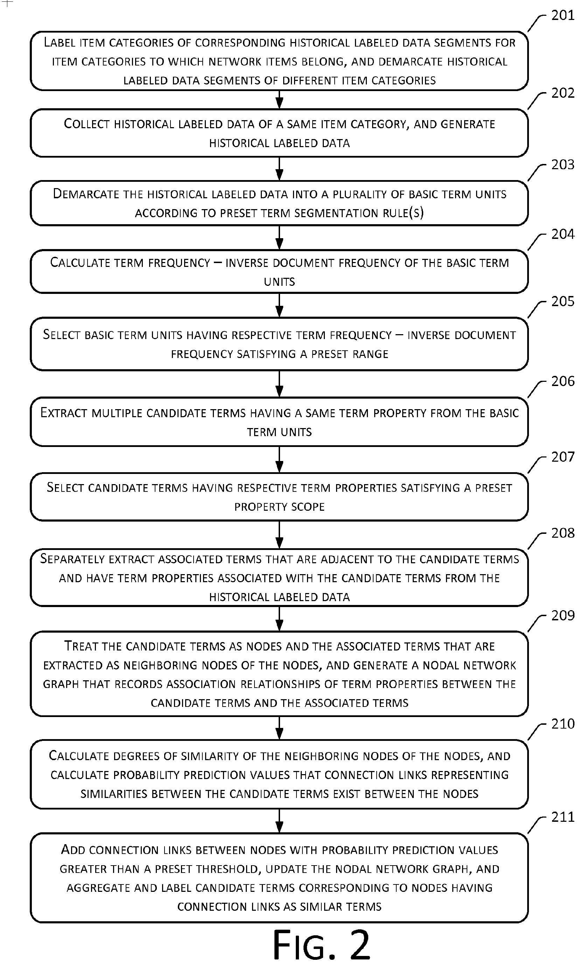

FIG. 2 shows a flowchart of a second embodiment of a similar term aggregation method of the present application, which may include the following operations.

Operation 201: Label item categories of corresponding historical labeled data segments for item categories to which network items belong, and demarcate historical labeled data segments of different item categories.

Operation 202: Collect historical labeled data of a same item category, and generate historical labeled data.

Among reviews related to electronic commerce, since great differences may exist in ways of description of the reviews and terms used for item categories to which network items belong, corresponding historical labeled data segments may be labeled for different item categories, and historical labeled data segments of different categories are demarcated. Historical labeled data segments of a same item category are collected, and historical labeled data is generated. As such, all text reviews of the same category are combined together.

Operation 203: Demarcate the historical labeled data into a plurality of basic term units according to preset term segmentation rule(s).

The term segmentation rule(s) can be preset according to Chinese syntactic logic, and demarcation of basic term units is performed on the historical labeled data. It is because different aspects of a same network item may be described in a single piece of text review. An example is "quality is good, delivery is very fast", which describes two aspects ("quality" and "delivery") of a network item at the same time. Splitting can be performed based on punctuation marks such as a comma and a period, thus demarcating thereof into "quality is good" and "delivery is very fast". The text review is then demarcated into basic term units such as "quality", "good", "delivery" and "very fast" according to a matching rule of nouns and adverbs.

Operation 204: Calculate term frequency - inverse document frequency of the basic term units.

Operation 205: Select basic term units having respective term frequency - inverse document frequency satisfying a preset range.

It should be noted that term frequency - inverse document frequency (TF-IDF) is a common weighted technique used for information search and data mining, and can reflect an amount of information and a degree of importance of a certain term in a text. A larger value indicates that the amount of information of the term in the text is larger, and the degree of importance thereof is higher.

Details of a formula of calculation for calculating the term frequency - inverse document frequency of the basic term units may be given as follows:

$$TF_{ik} = \frac{c_{ik}}{\sum_j c_{ij}}, IDF_i = \log \frac{N}{n_k},$$

A value of TF represents a frequency of an appearance of a term in a document, a numerator thereof represents a number of times that the term appears in all documents, and a denominator represents a number of appearances of all terms. A value of IDF represents a degree of importance of a term in a document set, a numerator represents a total number of documents, and a denominator represents a number of documents in which the term appears.

Basic term units having respective term frequency - inverse document frequency satisfying a preset range are selected. The efficiency of text aggregation is thereby improved by performing classification for important texts.

Operation 206: Extract multiple candidate terms having a same term property from the basic term units.

Operation 207: Select candidate terms having respective term properties satisfying a preset property scope.

For basic term units having respective term frequency - inverse document frequency satisfying a preset range, candidate terms having a same term property can be extracted, and candidate terms having respective term properties satisfying a preset property scope are selected. It is because only similarity relationships between candidate terms having specific term properties (for example, term properties such as a noun, an adjective, an adverb, etc.) are needed to be mined in a real application.

Operation 208: Separately extract associated terms that are adjacent to the candidate terms and have term properties associated with the candidate terms from the historical labeled data.

As a preferred example of the embodiments of the present application, operation 208 can include the following sub-operation.

Sub-operation S11: Extract associated terms that are adjacent to the candidate terms and are used for describing the candidate terms from the historical labeled data.

An association of term properties is an association according to a grammatical meaning. For example, in a common grammatical rule, a noun is adjacent to an adjective that describes the noun, such as "soft cloth material". An associated term "soft" is used for describing a candidate term "cloth material", and the associated term is adjacent to the candidate term in historical labeled data.

Operation 209: Treat the candidate terms as nodes and the associated terms that are extracted as neighboring nodes of the nodes, and generate a nodal network graph that records association relationships of term properties between the candidate terms and the associated terms.

The candidate terms may be treated as nodes, and the associated terms can be treated as neighboring nodes having edges with the nodes. A nodal network graph that can reflect and record association relationships of term properties between the candidate terms and the associated terms is thereby generated.

Operation 210: Calculate degrees of similarity of the neighboring nodes of the nodes, and calculate probability prediction values that connection links representing similarities between the candidate terms exist between the nodes.

Given neighboring nodes that are common to the nodes, a link prediction algorithm may be used to mine similarity relationships among the candidate terms based on the nodal network graph that is generated. The link prediction algorithm can predict whether a link connecting two unconnected nodes exists based on an existing network topological structure. By applying in the embodiments of the present application, if the number of neighboring nodes that are common to two nodes is larger, this indicates that these nodes may have a very close relationship, and the likelihood of an existence of a connection link therebetween becomes higher.

Specifically, degrees of similarity of neighboring nodes of nodes can be calculated, and are used as probability prediction values representing an existence of a connection link between the nodes. For example, for a node A and a node B, a Jaccard calculation equation $J(A,B) = |N(A) \cap N(B)|/|N(A) \cup N(B)|$ is used to obtain a degree of similarity of neighboring nodes, wherein $N(A)$ and $N(B)$ are neighboring node sets of the node A and the node B respectively.

The more the number of common neighboring nodes of two nodes is, the higher is the calculated degree of similarity is obtained, and the higher is the probability prediction value that a connection link exists between these two nodes.

Operation 211: Add connection links between nodes with probability prediction values greater than a preset threshold, update the nodal network graph, and aggregate and label candidate terms corresponding to nodes having connection links as similar terms.

Connection links can be added between nodes with probability prediction values greater than a preset threshold, and the nodal network graph with the added connection links is updated correspondingly. Candidate terms corresponding to nodes having connection links are aggregated and labeled as similar terms.

Different preset threshold can affect a network structure of the nodal network graph. One skilled in the art can set the preset threshold according to an actual need. For example, the preset threshold can be set as zero, which indicating that a connection link is added between nodes only when the nodes have the same set of neighboring nodes, thereby forming a nodal network graph having a relatively high density of connection links. Alternatively, the preset threshold can be set as a relatively high value, thereby forming a nodal network graph having a relatively sparse density of connection links. Corresponding aggregation methods can be adopted based on different network structures.

As a preferred example of the embodiments of the present application, the preset threshold includes a first preset threshold and a second preset threshold that is less than the first preset threshold. Adding the connection links between the nodes with the probability prediction values greater than the preset threshold, updating the nodal network graph, and aggregating and labeling the candidate terms corresponding to the nodes having the connection links as the similar terms may include the following sub-operations.

Sub-operation S21: Add a connection link between nodes having a probability prediction value greater than the first preset threshold, create a plurality of independent connected graphs in the updated nodal network graph for unconnected nodes and connected nodes, extract nodes included in a same connected graph, and aggregate candidate terms corresponding to the nodes.

It should be noted that a connected graph is usually referred to as a connected graph in an undirected graph if any two nodes have a connection that links therebetween.

In a real application, a large first preset threshold can be set, i.e., the likelihood that candidate terms corresponding to two nodes is very high. Therefore, a connection link is added only between nodes having a relatively high probability prediction value, and no connection link is added between nodes having a relatively low probability prediction value. Unconnected nodes and connected nodes are produced, thereby forming a plurality of relatively independent connected graphs. Nodes included in a same connected graph can be extracted, and candidate terms corresponding to the nodes are aggregated.

Sub-operation S22: Add a connection link between nodes having a probability prediction value greater than the second preset threshold, and for a region having a connection link density greater than a preset threshold, extracting nodes included in the region and aggregating candidate terms corresponding to the nodes.

In a real application, a smaller second preset threshold can be set, i.e., the likelihood that candidate terms corresponding to two nodes is very low. Therefore, connected links are added among a number of nodes to form a relatively dense region of connection links. Respective nodes included in various regions are separately extracted, and candidate terms corresponding to the nodes are aggregated separately.

With respect to forming regions, a community discovery algorithm may also be used for demarcating the regions. The community discovery algorithm can demarcate the nodal network graph into a plurality of communities based on a topological structure of the graph. An attempt is made to enable nodes inside a same community to possess a relatively strong connection relationship as much as possible, and thereby aggregate candidate terms corresponding to the nodes in the community.

An a preferred example of the embodiments of the present application, prior to updating the nodal network graph, the method further includes deleting connection links that existed among the neighboring nodes.

Since a user usually does not use more than two synonymous adjectives to describe a noun in a real application, connection links that existed among the neighboring nodes are deleted before the nodal network graph is updated.

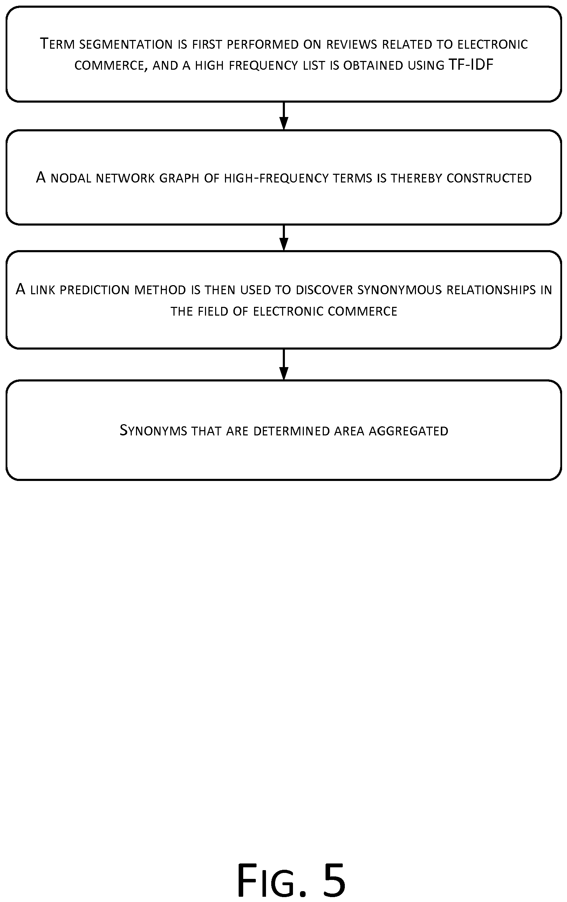

In order to facilitate one skilled in the art to understand the embodiments of the present application, FIG. 5 shows a flowchart of aggregating synonyms using a link prediction algorithm. As can be seen from the figure, term segmentation is first performed on reviews related to electronic commerce, and a high frequency list is obtained using TF-IDF. A nodal network graph of high-frequency terms is thereby constructed. A link prediction method is then used to discover synonymous relationships in the field of electronic commerce, and synonyms that are determined area aggregated.

According to the embodiments of the present application, historical labeled data segments of different item categories are categorized. Historical labeled data segments of a same item category are aggregated and generated as historical labeled data. Therefore, text reviews in the historical labeled data can be made to target at a particular network item category, thus making aggregation of similar terms to perform more suitably on reviews related to electronic commerce having demarcations according to industries and/or categories.

Furthermore, a nodal network graph is constructed based on candidate terms and associated terms. Probability prediction values are estimated for probabilities of having connection links among nodes in the nodal network graph, and connection links are added based on results of comparison between the probability prediction values and a preset threshold to form an updated nodal network graph. Candidate terms corresponding to nodes having the connection links are aggregated, from which similarity relationships among the candidate terms are discovered.

Furthermore, the embodiments of the present application adopt corresponding aggregation methods for different preset thresholds, and thus perform aggregations of similar terms according to actual situations, thus improving the flexibility of the aggregations of similar terms.

It should be noted that the method embodiments are described as series of action combinations for the sake of description. However, one skilled in the art should understand that the embodiments of the present application are not limited to the described orders of actions, because certain operations can be executed in other orders or in parallel according to the embodiments of the present application. Also, one skilled in the art should understand that the embodiments described in the specification are preferred embodiments, and actions involved therein may not be necessary for the embodiments of the present application.

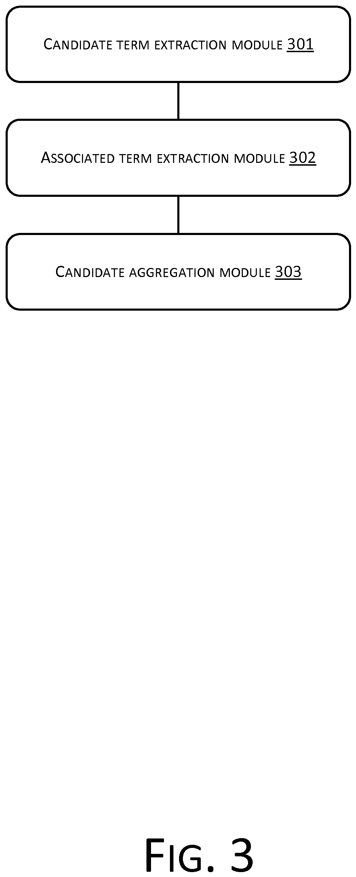

FIG. 3 shows a structural diagram of a first embodiment of a similar term aggregation apparatus of the present application, which may include the following modules.

A candidate term extraction module 301 is used for extracting a plurality of candidate terms having a same term property from historical labeled data of network items.

An associated term extraction module 302 is used for separately extracting associated terms that are adjacent to the candidate terms and have term properties associated therewith from the historical labeled data.

A candidate aggregation module 303 is used for aggregating the plurality of candidate terms based on similarity degrees of the associated terms, and labeling thereof as synonyms.

Compared to existing textual analysis apparatus that identify synonyms from literal semantics of candidate terms, the embodiments of the present application discover similarity relationships between candidate terms by extracting associated terms that are adjacent to the candidate terms and have term properties associated therewith and aggregating the candidate terms based on degrees of similarity between the candidate terms. Synonyms can be effectively classified for unstructured and non-standardized terms of reviews related to electronic commerce.

Furthermore, performing aggregation on similar candidate terms can refine key terms of review from the complex content of historical labeled data, helps a user to quickly understand an overall review situation of a network item, and improve the convenience of the user to obtain information.

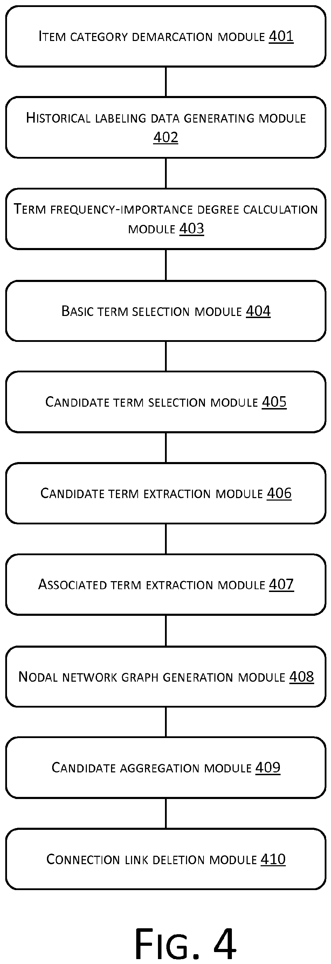

FIG. 4 shows a structural diagram of a second embodiment of a similar term aggregation apparatus of the present application, which may include the following modules.

An item category demarcation module 401 is used for labeling item categories of corresponding historical labeled data segments for item categories to which network items belong, and demarcating historical labeled data segments of different categories.

A historical labeling data generating module 402 is used for collecting historical labeled data segments of a same category, and generating historical labeled data.

A term frequency-importance degree calculation module 403 is used for calculating term frequency - inverse document frequency of a plurality of basic term units.

A basic term selection module 404 is used for selecting basic term units having respective term frequency - inverse document frequency satisfying a preset range.

A candidate term selection module 405 is used for selecting candidate terms with term properties satisfying a preset property range.

A candidate term extraction module 406 is used for extracting a plurality of candidate terms having a same term property from the historical labeled data of network items.

An associated term extraction module 407 is used for separately extracting associated terms that are adjacent to the candidate terms and have term properties associated therewith from the historical labeled data.

A nodal network graph generation module 408 is used for using the candidate terms as nodes, and extracting the associated terms as neighboring nodes of the nodes to generate a nodal network graph that records term property association relationships between the candidate terms and the associated terms.

A candidate aggregation module 409 is used for aggregating the plurality of candidate terms based on similarity degrees of the associated terms, and labeling thereof as synonyms.

A connection link deletion module 410 is used for deleting connection links that existed between the neighboring nodes.

As a preferred example of the embodiments of the present application, the candidate term aggregation module 409 may include the following sub-modules:

a similarity degree calculation sub-module used for calculating similarity degrees of the neighboring nodes of the nodes, and calculating probability prediction values of an existence of connection links between the nodes that represent similarities between the candidate terms; and

a connection link addition sub-module used for adding a connection link between nodes having a probability prediction value greater than a preset threshold, updating the nodal network graph, and aggregating candidate terms corresponding to nodes having connection links.

As a preferred example of the embodiments of the present application, the preset threshold includes a first preset threshold and a second preset threshold which is smaller than the first preset threshold. The connection link addition sub-module may include the following sub-units:

a connected graph aggregation sub-unit used for adding a connection link between nodes having a probability prediction value greater than the first preset threshold, creating a plurality of independent connected graphs in the updated nodal network graph for unconnected nodes and connected nodes, extracting nodes included in a same connected graph, and aggregating candidate terms corresponding to the nodes; and

a region aggregation sub-unit used for adding a connection link between nodes having a probability prediction value greater than the second preset threshold, and for a region having a connection link density greater than a preset threshold, extracting nodes included in the region and aggregating candidate terms corresponding to the nodes.

As a preferred example of the embodiments of the present application, the associated term extraction module 407 may include the following sub-module:

an associated term extraction sub-module used for extracting associated terms that are adjacent to the candidate terms and are used for describing the candidate terms from the historical labeled data.

According to the embodiments of the present application, historical labeled data segments of different item categories are categorized. Historical labeled data segments of a same item category are aggregated and generated as historical labeled data. Therefore, text reviews in the historical labeled data can be made to target at a particular network item category, thus making aggregation of similar terms to perform more suitably on reviews related to electronic commerce having demarcations according to industries and/or categories.

Furthermore, a nodal network graph is constructed based on candidate terms and associated terms. Probability prediction values are estimated for probabilities of having connection links among nodes in the nodal network graph, and connection links are added based on results of comparison between the probability prediction values and a preset threshold to form an updated nodal network graph. Candidate terms corresponding to nodes having the connection links are aggregated, from which similarity relationships among the candidate terms are discovered.

Furthermore, the embodiments of the present application adopt corresponding aggregation methods for different preset thresholds, and thus perform aggregations of similar terms according to actual situations, thus improving the flexibility of the aggregations of similar terms.

Due to their basic similarities to the method embodiments, the description of the apparatus embodiments is relatively simple. Related portions thereof can be referenced to respective portions of the method embodiments.

Various embodiments in the specification of the present application are described in a progressive manner. The focus of each embodiment is different from those of other embodiments. Same and similar portions among the embodiments can be referenced with one another.

One skilled in the art can clearly understand that the embodiments of the present disclosure can be as a method, an apparatus, or a computer software product. Therefore, the embodiments of the present application can be used in a form of a complete hardware embodiment, a complete software embodiment, or a combination of software and hardware embodiments. Furthermore, the embodiments of the present application can use a computer software product that is implemented in a form of one or more computer usable storage media (which include, but are not limited to a magnetic storage device, CD-ROM, an optical storage device, etc.) that include computer usable program codes.

In a typical configuration, a computing device includes one or more processors (CPU), an output/output interface, a network interface, and memory. The memory may include a form of computer readable media such as a volatile memory, a random access memory (RAM) and/or a non-volatile memory, for example, a read-only memory (ROM) or a flash RAM. The memory is an example of a computer readable media. The computer readable media may include a volatile or non-volatile type, a removable or non-removable media, which may achieve storage of information using any method or technology. The information may include a computer-readable instruction, a data structure, a program module or other data. Examples of computer storage media include, but not limited to, phase-change memory (PRAM), static random access memory (SRAM), dynamic random access memory (DRAM), other types of random-access memory (RAM), read-only memory (ROM), electronically erasable programmable read-only memory (EEPROM), quick flash memory or other internal storage technology, compact disk read-only memory (CD-ROM), digital versatile disc (DVD) or other optical storage, magnetic cassette tape, magnetic disk storage or other magnetic storage devices, or any other non-transmission media, which may be used to store information that may be accessed by a computing device. As defined herein, the computer readable media does not include transitory media, such as modulated data signals and carrier waves.

The present disclosure is described with reference to flowcharts and/or block diagrams of the methods, terminal devices (systems), and computer program products according to the embodiments of the present disclosure. It should be understood that computer program instructions may be used to implement each process and/or block in the flowcharts and/or block diagrams and a combination of process(es) and/or block(s) in the flowcharts and/or the block diagrams. These computer program instructions may be provided to a general-purpose computer, a special-purpose computer, an embedded processor, or a processor of another programmable data processing terminal device to generate a machine, so that the instructions executed by a computer or a processor of another programmable data processing terminal device generate an apparatus for implementing function(s) specified in one or more processes in the flowcharts and/or in one or more blocks in the block diagrams.

These computer program instructions may also be stored in a computer readable storage device that can instruct a computer or another programmable data processing terminal device to perform operations in a particular manner, such that the instructions stored in the computer readable storage device generate an article of manufacture that includes an instruction apparatus. The instruction apparatus implements function(s) that is/are specified in one or more processes in the flowcharts and/or in one or more blocks in the block diagrams.

These computer program instructions may also be loaded onto a computer or another programmable data processing terminal device, such that a series of operations are performed on the computer or the other programmable terminal device, thereby generating computer-implemented processing. Therefore, the instructions executed on the computer or the other programmable terminal device provide a procedure for implementing function(s) specified in one or more processes in the flowcharts and/or in one or more blocks in the block diagrams.

Although preferred embodiments in the embodiments of the present application have been described, one skilled in the art may perform other changes and modifications to these embodiments after knowing the basic inventive concept. Therefore, the appended claims are intended to be interpreted as including the preferred embodiments and all the changes and modifications that fall into the scope of the embodiments of the present application.

Finally, it should be further noted that relational terms such as "first" and "second" are only used for distinguishing one entity or operation from another entity or operation, and does not necessarily require or imply any of these relationships or ordering between these entities or operations in reality. Moreover, terms such as "include", "contain" or other variations thereof are intended to cover non-exclusive inclusion, so that a process, method, article or terminal device including a series of elements not only includes the elements, but also includes other elements not explicitly listed, or further includes inherent elements of the process, method, article or terminal device. Without further restrictions, an element defined by a phrase "include a/an..." does not exclude other same elements to exist in a process, method, article, or terminal device that includes the element.

Similar term aggregation methods and similar term aggregation apparatuses provided in the present application are described in detail above. Specific examples are used herein to illustrate the principles and implementations of the present application, and the description of the above embodiments is merely used to help understand the methods of the present application and the core ideas thereof. Furthermore, one of ordinary skill in the art may change the specific implementations and scopes of application based on the ideas of the present application. In short, the content of the specification should not be construed as limitations to the present application.

**Claims**

1.  A similar term aggregation method comprising:

    extracting a plurality of candidate terms having a same term property from historical labeled data of network items;
    separately extracting associated terms that are adjacent to the candidate terms and have term properties associated therewith from the historical labeled data; and
    aggregating the plurality of candidate terms based on similarity degrees of the associated terms, and labeling thereof as synonyms.

2.  The method of claim 1, wherein extracting the plurality of candidate terms having the same term property from the historical labeled data of the network items comprises:

    demarcating the historical labeled data into a plurality of basic term units according to a preset term segmentation rule; and
    extracting the plurality of candidate terms having the same term property from the plurality of basic term units.

3.  The method of claim 2, wherein: prior to extracting the plurality of candidate terms having the same term property, the method further comprises:

    calculating term frequency - inverse document frequency of the plurality of basic term units; and
    selecting basic term units having respective term frequency - inverse document frequency satisfying a preset range.

4.  The method of claim 1, wherein: prior to aggregating the plurality of candidate terms based on the similarity degrees of the associated terms, the method further comprises using the candidate terms as nodes, and extracting the associated terms as neighboring nodes of the nodes to generate a nodal network graph that records term property association relationships between the candidate terms and the associated terms.

5.  The method of claim 4, wherein aggregating the plurality of candidate terms based on the similarity degrees of the associated terms comprises:

    calculating degrees of similarity of the neighboring nodes of the nodes, and calculating probability prediction values of an existence of connection links between the nodes that represent similarities between the candidate terms; and
    adding a connection link between nodes having a probability prediction value greater than a preset threshold, updating the nodal network graph, and aggregating candidate terms corresponding to nodes having connection links.

6.  The method of claim 5, wherein the preset threshold includes a first preset threshold and a second preset threshold which is smaller than the first preset threshold, and adding the connection link between the nodes having the probability prediction value greater than the preset threshold, updating the nodal network graph, and aggregating the candidate terms corresponding to the nodes having connection links comprises:

    adding a connection link between nodes having a probability prediction value greater than the first preset threshold, creating a plurality of independent connected graphs in the updated nodal network graph for unconnected nodes and connected nodes, extracting nodes included in a same connected graph, and aggregating candidate terms corresponding to the nodes; and adding a connection link between nodes having a probability prediction value greater than the second preset threshold, and for a region having a connection link density greater than a preset threshold, extracting nodes included in the region and aggregating candidate terms corresponding to the nodes.

7. The method of claim 5, wherein: prior to updating the nodal network graph, the method further comprises deleting connection links that have previously existed between the neighboring nodes.

8. The method of claim 1, wherein: prior to extracting the plurality of candidate terms having the same term property from the historical labeled data of the network items, the method further comprises:

    labeling item categories of corresponding historical labeled data segments for item categories to which the network items belong, and demarcating historical labeled data segments of different categories; and
    collecting historical labeled data segments of a same category, and generating the historical labeled data.

9. The method of claim 1, wherein separately extracting the associated terms that are adjacent to the candidate terms and have the term properties associated therewith from the historical labeled data comprises extracting associated terms that are adjacent to the candidate terms and are used for describing the candidate terms from the historical labeled data.

10. The method of claim 1, wherein: after extracting the plurality of candidate terms having the same term property from the historical labeled data of the network items, the method further comprises selecting candidate terms having the term property satisfying a preset property scope.

11. The method of claim 1, wherein the historical labeled data of the network items is term data that has an amount of character data less than a preset threshold and is used for reviewing the network items.

12. A similar term aggregation apparatus comprising:

    a candidate term extraction module used for extracting a plurality of candidate terms having a same term property from historical labeled data of network items;
    an associated term extraction module used for separately extracting associated terms that are adjacent to the candidate terms and have term properties associated therewith from the historical labeled data; and
a candidate aggregation module used for aggregating the plurality of candidate terms based on similarity degrees of the associated terms, and labeling thereof as synonyms.

13. The apparatus of claim 12, wherein the candidate term extraction module comprises:

    a basic term unit demarcation sub-module used for demarcating the historical labeled data into a plurality of basic term units according to a preset term segmentation rule; and
    a candidate term extraction sub-module used for extracting the plurality of candidate terms having the same term property from the plurality of basic term units.

14. The apparatus of claim 13, further comprising:

    a term frequency-importance degree calculation module used for calculating term frequency - inverse document frequency of the plurality of basic term units; and
    a basic term selection module used for selecting basic term units having respective term frequency - inverse document frequency satisfying a preset range.

15. The apparatus of claim 12, further comprising a nodal network graph generation module used for using the candidate terms as nodes, and extracting the associated terms as neighboring nodes of the nodes to generate a nodal network graph that records term property association relationships between the candidate terms and the associated terms.

16. The apparatus of claim 15, wherein the candidate term aggregation module comprises:

    a similarity degree calculation sub-module used for calculating degrees of similarity of the neighboring nodes of the nodes, and calculating probability prediction values of an existence of connection links between the nodes that represent similarities between the candidate terms; and
    a connection link addition sub-module used for adding a connection link between nodes having a probability prediction value greater than a preset threshold, updating the nodal network graph, and aggregating candidate terms corresponding to nodes having connection links.

17. The apparatus of claim 16, wherein the preset threshold comprises a first preset threshold and a second preset threshold which is smaller than the first preset threshold, and the connection link addition sub-module comprises:

a connected graph aggregation sub-unit used for adding a connection link between nodes having a probability prediction value greater than the first preset threshold, creating a plurality of independent connected graphs in the updated nodal network graph for unconnected nodes and connected nodes, extracting nodes included in a same connected graph, and aggregating candidate terms corresponding to the nodes; and a region aggregation sub-unit used for adding a connection link between nodes having a probability prediction value greater than the second preset threshold, and for a region having a connection link density greater than a preset threshold, extracting nodes included in the region and aggregating candidate terms corresponding to the nodes.

18. The apparatus of claim 16, further comprising a connection link deletion module used for deleting connection links that existed between the neighboring nodes.

19. The apparatus of claim 12, further comprising:

an item category demarcation module used for labeling item categories of corresponding historical labeled data segments for item categories to which the network items belong, and demarcating different categories of historical labeled data segments; and a historical labeled data generation module used for collecting historical labeled data segments of a same category, and generating the historical labeled data.

20. The apparatus of claim 12, wherein the associated term extraction module comprises an associated term extraction sub-module used for extracting associated terms that are adjacent to the candidate terms and are used for describing the candidate terms from the historical labeled data.

21. The apparatus of claim 12, further comprising a candidate term selection module used for selecting candidate terms having the term property satisfying a preset property scope.

22. The apparatus of claim 12, wherein the historical labeled data of the network items is term data that has an amount of character data less than a preset threshold and is used for reviewing the network items.

101

EXTRACT A PLURALITY OF CANDIDATE TERMS HAVING A SAME TERM PROPERTY FROM HISTORICAL LABELED DATA OF A NETWORK ITEM

102

SEPARATELY EXTRACT ASSOCIATED TERMS BEING ADJACENT TO THE CANDIDATE TERMS AND HAVING RESPECTIVE TERM PROPERTIES ASSOCIATED WITH THE CANDIDATE TERMS FROM THE HISTORICAL LABELED DATA

103

AGGREGATE THE PLURALITY OF CANDIDATE TERMS BASED ON SIMILARITY DEGREES OF THE ASSOCIATED TERMS, AND LABELING THEREOF AS SIMILAR TERMS

FIG. 1

201

LABEL ITEM CATEGORIES OF CORRESPONDING HISTORICAL LABELED DATA SEGMENTS FOR ITEM CATEGORIES TO WHICH NETWORK ITEMS BELONG, AND DEMARCATE HISTORICAL LABELED DATA SEGMENTS OF DIFFERENT ITEM CATEGORIES

202

COLLECT HISTORICAL LABELED DATA OF A SAME ITEM CATEGORY, AND GENERATE HISTORICAL LABELED DATA

203

DEMARCATE THE HISTORICAL LABELED DATA INTO A PLURALITY OF BASIC TERM UNITS ACCORDING TO PRESET TERM SEGMENTATION RULE(S)

204

CALCULATE TERM FREQUENCY – INVERSE DOCUMENT FREQUENCY OF THE BASIC TERM UNITS

205

SELECT BASIC TERM UNITS HAVING RESPECTIVE TERM FREQUENCY – INVERSE DOCUMENT FREQUENCY SATISFYING A PRESET RANGE

206

EXTRACT MULTIPLE CANDIDATE TERMS HAVING A SAME TERM PROPERTY FROM THE BASIC TERM UNITS

207

SELECT CANDIDATE TERMS HAVING RESPECTIVE TERM PROPERTIES SATISFYING A PRESET PROPERTY SCOPE

208

SEPARATELY EXTRACT ASSOCIATED TERMS THAT ARE ADJACENT TO THE CANDIDATE TERMS AND HAVE TERM PROPERTIES ASSOCIATED WITH THE CANDIDATE TERMS FROM THE HISTORICAL LABELED DATA

209

TREAT THE CANDIDATE TERMS AS NODES AND THE ASSOCIATED TERMS THAT ARE EXTRACTED AS NEIGHBORING NODES OF THE NODES, AND GENERATE A NODAL NETWORK GRAPH THAT RECORDS ASSOCIATION RELATIONSHIPS OF TERM PROPERTIES BETWEEN THE CANDIDATE TERMS AND THE ASSOCIATED TERMS

210

CALCULATE DEGREES OF SIMILARITY OF THE NEIGHBORING NODES OF THE NODES, AND CALCULATE PROBABILITY PREDICTION VALUES THAT CONNECTION LINKS REPRESENTING SIMILARITIES BETWEEN THE CANDIDATE TERMS EXIST BETWEEN THE NODES

211

ADD CONNECTION LINKS BETWEEN NODES WITH PROBABILITY PREDICTION VALUES GREATER THAN A PRESET THRESHOLD, UPDATE THE NODAL NETWORK GRAPH, AND AGGREGATE AND LABEL CANDIDATE TERMS CORRESPONDING TO NODES HAVING CONNECTION LINKS AS SIMILAR TERMS

FIG. 2

CANDIDATE TERM EXTRACTION MODULE 301

ASSOCIATED TERM EXTRACTION MODULE 302

CANDIDATE AGGREGATION MODULE 303

FIG. 3

ITEM CATEGORY DEMARCATION MODULE 401

HISTORICAL LABELING DATA GENERATING MODULE 402

TERM FREQUENCY-IMPORTANCE DEGREE CALCULATION MODULE 403

BASIC TERM SELECTION MODULE 404

CANDIDATE TERM SELECTION MODULE 405

CANDIDATE TERM EXTRACTION MODULE 406

ASSOCIATED TERM EXTRACTION MODULE 407

NODAL NETWORK GRAPH GENERATION MODULE 408

CANDIDATE AGGREGATION MODULE 409

CONNECTION LINK DELETION MODULE 410

FIG. 4

TERM SEGMENTATION IS FIRST PERFORMED ON REVIEWS RELATED TO ELECTRONIC COMMERCE, AND A HIGH FREQUENCY LIST IS OBTAINED USING TF-IDF

A NODAL NETWORK GRAPH OF HIGH-FREQUENCY TERMS IS THEREBY CONSTRUCTED

A LINK PREDICTION METHOD IS THEN USED TO DISCOVER SYNONYMOUS RELATIONSHIPS IN THE FIELD OF ELECTRONIC COMMERCE

SYNONYMS THAT ARE DETERMINED AREA AGGREGATED

FIG. 5

## INTERNATIONAL SEARCH REPORT

| International application No. |
|---|
| **PCT/CN2016/108980** |

**A. CLASSIFICATION OF SUBJECT MATTER**

G06F 17/30 (2006.01) i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, EPODOC, WPI, CNKI, IEEE: similar word, part of speech, synonymic, associate, polymerize, similar+, word, property, charactor, classif+, category, relate, cluster+, synonymous

**C. DOCUMENTS CONSIDERED TO BE RELEVANT**

| Category* | Citation of document, with indication, where appropriate, of the relevant passages | Relevant to claim No. |
|---|---|---|
| A | CN 104657514 A (CHENGDU ZHISHU TECHNOLOGY CO., LTD.), 27 May 2015 (27.05.2015), description, paragraphs [0045]-[0087] | 1-22 |
| A | CN 103886053 A (UNIVERSITY OF ELECTRONIC SCIENCE AND TECHNOLOGY OF CHINA), 25 June 2014 (25.06.2014), the whole document | 1-22 |
| A | CN 103258000 A (BEIJIE CHUANGXIANG (BEIJING) SOFTWARE CO., LTD.), 21 August 2013 (21.08.2013), the whole document | 1-22 |
| A | CN 104090890 A (TENCENT INC.), 08 October 2014 (08.10.2014), the whole document | 1-22 |
| A | US 2010153367 A1 (RAYTHEON CO.), 17 June 2010 (17.06.2010), the whole document | 1-22 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 February 2017 (08.02.2017) | **08 March 2017 (08.03.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WU, Jiangang** Telephone No.: (86-10) **62414055** |

Form PCT/ISA/210 (second sheet) (July 2009)

## INTERNATIONAL SEARCH REPORT
### Information on patent family members

International application No.

**PCT/CN2016/108980**

| Patent Documents referred in the Report | Publication Date | Patent Family | Publication Date |
|---|---|---|---|
| CN 104657514 A | 27 May 2015 | None | |
| CN 103886053 A | 25 June 2014 | None | |
| CN 103258000 A | 21 August 2013 | None | |
| CN 104090890 A | 08 October 2014 | CN 104090890 B | 04 May 2016 |
| US 2010153367 A1 | 17 June 2010 | US 8577924 B2 | 05 November 2013 |

Form PCT/ISA/210 (patent family annex) (July 2009)

**REFERENCES CITED IN THE DESCRIPTION**

**Patent documents cited in the description**

- CN 201510960651X